# DEMANDE DE BREVET EUROPEEN

(11) **EP 1 380 605 A1**
(43) Date de publication de la demande: **14.01.2004**
(21) Numéro de dépôt: 03291666.0
(22) Date de dépôt: 04.07.2003
(51) Int. Cl.: C08F 259/08, C08F 214/22, C08F 2/22, C08J 3/16

(54) **Procédé de fabrication du polymère du fluorure de vinylidène**

(30) Priorité: 12.07.2002 FR 0208825
(71) Demandeur: Atofina, 92800 Puteaux (FR)
(72) Inventeur: Pascal, Thierry, 69390 Charly (FR)
(74) Mandataire: Neel, Henry

(57) **Abrégé**

L'invention est un procédé discontinu ou semi-continu de fabrication de copolymère du VDF comprenant en poids 95 à 99,9% de VDF pour respectivement 5 à 0,1% d'au moins un comonomère fluoré dans lequel :
- on réalise une dispersion de VDF (fluorure de vinylidène) dans l'eau, éventuellement à l'aide d'un additif dispersant, la dite dispersion étant initialement mise en contact avec un amorceur organosoluble capable de provoquer la polymérisation des monomères,
- on continue éventuellement d'ajouter du VDF,
- on introduit le comonomère soit dans la dispersion initiale de VDF soit au cours de la polymérisation soit en partie dans la dispersion initiale et en partie au cours de la polymérisation,
- puis après avoir polymérisé au moins 50% du VDF nécessaire pour former tout le PVDF on ajoute l'essentiel de l'agent de transfert de chaîne (CTA),
- on polymérise le reste du VDF,
- on sépare par tout moyen le PVDF de l'eau et des restes éventuels des réactifs engagés.

La proportion de copolymère est suffisamment faible pour que le polymère conserve les propriétés d'un PVDF homopolymère c'est à dire la température de fusion, l'enthalpie de fusion, la rigidité mécanique et la résistance au fluage. De plus ce procédé est très simple et ne nécessite pas l'usage d'additifs pouvant contaminer le PVDF.

L'invention concerne aussi le procédé décrit plus haut dans lequel à l'issue de la polymérisation le PVDF est recueilli sous forme d'un latex, ou d'un latex coagulé, ou encore d'une crème aérée moins dense que l'eau formée à partir d'un latex coagulé, pour être ensuite directement séché en le mettant au contact d'un gaz chaud dans un atomiseur sans l'avoir préalablement lavé à l'eau déionisée.

## Description

### [Domaine de l'invention]

Les polymères à base de fluorure de vinylidène (VDF) tels que par exemple le PVDF (polyfluorure de vinylidène) sont connus pour offrir d'excellentes propriétés de stabilité mécanique, une très grande inertie chimique, ainsi qu'une bonne résistance au vieillissement. Ces qualités sont exploitées pour des domaines d'application variés. On citera par exemple, la fabrication de pièces extrudées ou injectées pour l'industrie du génie chimique ou la microélectronique, l'utilisation sous forme de gaine d'étanchéité pour le transport des gaz ou des hydrocarbures, l'obtention de films ou de revêtements permettant la protection dans le domaine architectural, et la réalisation d'éléments protecteurs pour des usages électrotechniques. La présente invention concerne un procédé de fabrication du PVDF et plus particulièrement d'un copolymère du VF2 comprenant 0,1 à 5% en poids d'un comonomère fluoré.

### [L'art antérieur et le problème technique]

Parfois le niveau de stabilité thermique du PVDF est insuffisant, en particulier lors des étapes de mise en oeuvre à l'état fondu ou lors de son utilisation prolongée à des températures supérieures à 150°C. Ce défaut de stabilité thermique se traduit initialement par l'obtention d'une coloration jaune, préjudiciable à l'aspect du produit, et peut éventuellement induire, dans un stade avancé de dégradation, une perte des propriétés d'usages. L'art antérieur a déjà décrit des moyens pour éviter la dégradation thermique du PVDF soit en proposant d'ajouter des additifs dans le PVDF déjà fabriqué soit en proposant des nouveaux procédés de fabrication.

Dans la demande de brevet **EP 0 796 889 A1** on propose d'améliorer la stabilité thermique du PVDF par ajout de dérivés carboxylates de Bismuth.

Dans la demande de brevet **EP 0 870 792 A1** on décrit l'ajout d'additifs à base de nitrate de métaux alcalins pour améliorer la stabilité thermique. Ils peuvent être incorporés au polymère fluoré soit à différents stades de sa préparation soit au cours de son extrusion après sa préparation .

Les brevets **US 3 438 934, US 3 728 303, US 3 331 811, JP 46 015 020, JP 48 034 823** et **JP 09 188 794** décrivent différents types d'additifs minéraux ou organo-minéraux qui sont incorporés dans les polymères fluorés pour élever leur stabilité thermique.

La demande de brevet **EP 0 893 457 A1** préconise la synthèse en suspension de polymères halogénés, dont le PVDF, en présence de colloïdes correspondant à des copolymères porteurs de fonctions acides carboxyliques salifiées. Par exemple on effectue la polymérisation en suspension aqueuse du VF2 en présence d'un copolymère de l'acide acrylique et de l'acrylate de 2-éthylhexyle, d'un initiateur radicalaire et d'un agent de transfert de chaîne. Le copolymère de l'acide acrylique et de l'acrylate de 2-éthylhexyle, l'initiateur radicalaire et l'agent de transfert de chaîne sont introduits au début de la polymérisation. Les produits ainsi obtenus présentent une stabilité chimique et thermique améliorées.

Le brevet **EP 169328** décrit la polymérisation du VF2 en présence d'un surfactant, d'un initiateur et de trichlorofluorométhane ou d'alcool isopropylique, ces deux derniers étant des agents de transfert. Le jaunissement du PVDF est fortement réduit. L'initiateur est toujours ajouté après une partie ou la totalité des agents de transfert.

La demande de brevet **FR 2804438 A1** décrit un procédé de préparation d'un polymère fluoré par polymérisation d'une émulsion aqueuse d'au moins un monomère fluoré comprenant du fluorure de vinylidène et éventuellement un ou plusieurs autres monomères, cette émulsion contenant en outre un surfactant fluoré, un initiateur radicalaire, un agent de transfert et éventuellement une paraffine, caractérisé en ce qu'on choisit :
1°) le surfactant fluoré parmi les perfluoroalkanoates de lithium de formule générale ( I ):

   CₙF₂ₙ₊₁―CO₂⁻ Li⁺ (I)

   n nombre entier valant de 6 à 12,
2°) l'initiateur radicalaire parmi les dialkylpéroxydicarbonate et les dialkylpéroxyde,
3°) l'agent de transfert est choisi parmi l'isopropanol, l'acétate de méthyle, l'acétate d'éthyle, l'acétate de n-butyle, le malonate de diéthyie, le carbonate de diéthyle,
4°) la quantité de fluorure de vinylidène engagée dans la polymérisation est majoritaire en % molaire par rapport à la quantité du ou des autre(s) monomère(s) fluoré(s) éventuellement engagée,
   et en ce qu'on coagule le latex obtenu à la fin de la polymérisation puis on lave à l'eau le latex coagulé pour en éliminer les impuretés solubles dans l'eau, obtenant ainsi un latex coagulé purifié dans lequel la teneur en (per)fluoroalkanoate de lithium est inférieure ou égale à 200 p.p.m.
   Ce procédé conduit à un polymère ne jaunissant pas au cours du temps ou sous l'effet d'un traitement thermique résultant de la transformation. Le sel de lithium et l'agent de transfert de chaîne sont introduits au début de la polymérisation.

Dans la demande de brevet **EP 0 655 468 A1** on a décrit le trifluorodichloroethane (F123) comme agent de transfert pour la polymérisation en émulsion du VDF, avec pour objectif d'améliorer les caractéristiques du polymère en terme de variation de coloration à hautes températures. L'agent de transfert de chaîne est introduit en partie au début de la polymérisation et ensuite par incréments au fur et à mesure de la formation du PVDF.

Le brevet **US 5583190** décrit la préparation du PVDF en émulsion à haute température (95-120°C) comme un moyen efficace de réduire son aptitude à la deshydrofluoration thermique, et donc de réduire sa tendance à la coloration à haute température. L'agent de transfert de chaîne est ajouté au début de la polymérisation et aussi pendant cette polymérisation.

On a maintenant trouvé qu'on pouvait polymériser le VF2 et obtenir un polymère ayant un très faible indice de jaune à condition d'introduire une très faible quantité de comonomère, de l'ordre de 0,1 à 5% en poids, et d'introduire l'essentiel de l'agent de transfert de chaîne après qu'au moins 50% du VF2 ait été polymérisé. La proportion de monomère est suffisamment faible pour que le polymère conserve les propriétés d'un homopolymère de VDF c'est à dire la température de fusion, l'enthalpie de fusion, la rigidité mécanique et la résistance au fluage.

L'art antérieur a déjà décrit des procédés très proches. Ainsi la demande de brevet **EP 670353 A2** décrit un procédé de synthèse du PVDF dans lequel on introduit l'agent de transfert de chaîne après qu'une partie du VF2 ait été polymérisée. Toutefois le but de cet art antérieur est de préparer un PVDF pour faire des peintures brillantes et résistant aux solvants. Rien n'est écrit sur le jaunissement du PVDF de plus les exemples ne concernent que du PVDF homopolymère. Dans la description il est mentionné que le PVDF peut contenir jusqu'à 15% de comonomère or à de telles proportions les propriétés du produit n'ont rien à voir avec celles du PVDF homopolymère .

La demande de brevet **EP 526216 A2** décrit un procédé de synthèse de PVDF contenant entre 0,5 et 4% en poids de comonomère dans lequel on introduit l'agent de transfert de chaîne après qu'une proportion comprise entre 10 et 50% du VF2 ait été polymérisée. Le PVDF à cause de sa très grande pureté et de son inertie chimique est utilisé comme matériau pour transporter et stocker l'eau ultra pure ainsi que les produits ultra purs qu'on utilise dans la fabrication des semi conducteurs. Toutefois il subsiste un défaut à savoir que la taille des sphérulites est trop importante et donc l'état de surface n'est pas assez lisse, ce qui peut entrainer le développement de microorganismes à la surface et ainsi contaminer l'eau. Dans ce cadre, il est spécifié que le but de l'invention est de préparer un PVDF ayant des sphérulites très petites pour présenter un bon état de surface. Cet art antérieur n'a donc rien à voir avec la présente invention.

### [Brève description de l'invention]

L'invention est un procédé discontinu ou semi-continu de fabrication de copolymère du VDF comprenant en poids 95 à 99,9% de VDF pour respectivement 5 à 0,1% d'au moins un comonomère fluoré dans lequel :
- on réalise une dispersion de VDF (fluorure de vinylidène) dans l'eau, éventuellement à l'aide d'un additif dispersant, la dite dispersion étant initialement mise en contact avec un amorceur organosoluble capable de provoquer la polymérisation des monomères,
- on continue éventuellement d'ajouter du VDF,
- on introduit le comonomère soit dans la dispersion initiale de VDF soit au cours de la polymérisation soit en partie dans la dispersion initiale et en partie au cours de la polymérisation,
- puis après avoir polymérisé au moins 50% du VDF nécessaire pour former tout le PVDF on ajoute l'essentiel de l'agent de transfert de chaîne (CTA),
- on polymérisé le reste du VDF,
- on sépare par tout moyen le PVDF de l'eau et des restes éventuels des réactifs engagés.

La proportion de copolymère est suffisamment faible pour que le polymère conserve les propriétés d'un PVDF homopolymère c'est à dire la température de fusion, l'enthalpie de fusion, la rigidité mécanique et la résistance au fluage. De plus ce procédé est très simple et ne nécessite pas l'usage d'additifs pouvant contaminer le PVDF.

Le volume d'eau dans lequel on réalise la dispersion des monomères, les quantités d'additif dispersant, d'initiateur et de CTA sont déterminables facilement par l'homme de métier. On effectue la polymérisation dans un réacteur agité puis on sépare par tout moyen le PVDF (il est sous forme de particules solides ) et l'eau. Ces techniques sont connues en elles mêmes et sont décrites dans les brevets US 4025709, US 4569978, US 4360652, EP 626396 et EP 0655468.

Selon la nature de l'additif dispersant et ses proportions le procédé est dit "en émulsion", "en suspension" ou tous autres procédés dérivés de l'émulsion ou de la suspension (microsuspension, miniémulsion...), lesquels sont parfaitement connus par l'homme de l'art. Après la fin de la polymérisation on sépare le PVDF de l'eau et des restes éventuels des réactifs engagés.

Dans le cas des procédés type suspension, le PVDF se présente sous forme la d'une dispersion granulaire dont la taille moyenne des grains permet de réaliser directement une filtration et un lavage, par exemple par passage d'eau pure dans le système de filtration.

Dans le cas des procédés type émulsion, le polymère se présente sous la forme d'un latex composé de particules très fines, dont le diamètre moyen est généralement inférieur à 1 micron. Ce latex peut être coagulé et éventuellement concentré en éliminant une partie de l'eau par exemple par centrifugation. Dans l'état coagulé, il est également possible d'obtenir une crème aérée moins dense que l'eau qu'on peut laver avec de l'eau déionisée selon des techniques déjà décrites par l'art antérieur (brevets US 4,218,517 et EP 0 460 284). Puis on peut sécher la crème lavée en la mettant au contact d'un gaz chaud dans un atomiseur et on recueille le PVDF en poudre. Cette technique est connue et utilisée dans les procédés de fabrication du PVDF.

Cependant on a découvert que si on n'effectue pas cette opération de lavage intermédiaire et qu'on atomise directement, soit le latex initial éventuellement dilué, soit le latex coagulé éventuellement dilué au préalable, ou encore la crème aérée, alors on obtient un PVDF qui est moins coloré.

Cette atomisation directe ne s'applique qu'à un produit provenant d'un procédé émulsion (fines particules) et comprenant un ou plusieurs ingrédients sublimables au cours de l'atomisation tel que par exemple le tensioactif (additif dispersant).

L'invention concerne aussi le procédé décrit plus haut dans lequel à l'issue de la polymérisation le PVDF est recueilli sous forme d'un latex , ou d'un latex coagulé, ou encore d'une crème aérée moins dense que l'eau formée à partir d'un latex coagulé, pour être ensuite directement séché en le mettant au contact d'un gaz chaud dans un atomiseur sans l'avoir préalablement lavé à l'eau déionisée.

### [Description détaillée de l'invention]

**S'agissant du comonomère fluoré** il est avantageusement choisi parmi les composés contenant un groupe vinyle capable de s'ouvrir par l'action de radicaux libres pour se polymériser et qui contient, directement attaché à ce groupe vinyle, au moins un atome de fluor, un groupe fluoroalkyle ou un groupe fluoroalkoxy. A titre d'exemple de comonomère on peut citer le fluorure de vinyle; le trifluoroethylene; le chlorotrifluoroethylene (CTFE); le 1,2-difluoroethylene; le tetrafluoroethylene (TFE); l'hexafluoropropylene (HFP); les perfluoro(alkyl vinyl) ethers tels que le perfluoro(methyl vinyi)ether (PMVE), le perfluoro(ethyl vinyl) ether (PEVE) et le perfluoro(propyl vinyl) ether (PPVE); le perfluoro( 1,3 -dioxole); le perfluoro(2,2-dimethyl- 1,3 -dioxole) (PDD); le produit de formule CF2=CFOCF2CF(CF3)OCF2CF2X dans laquelle X est SO2F, CO2H, CH2OH, CH2OCN ou CH20PO3H; le produit de formule CF2=CFOCF2CF2SO2F; le produit de formule F(CF2)nCH20CF=CF2 dans laquelle n est 1, 2, 3, 4 or 5; le produit de formule R1CH2OCF=CF2 dans laquelle R1 est l'hydrogène ou F(CF2)z et z vaut 1, 2, 3 ou 4; le produit de formule R3OCF=CH2 dans laquelle R3 est F(CF2)z- et z est 1, 2, 3 or 4; le perfluorobutyl ethylene (PFBE); le 3,3,3-trifluoropropene et le 2-trifluoromethyl-3 ,3 ,3 -trifluoro- 1 -propene. On peut utiliser plusieurs comonomères. Avantageusement la proportion de comonomère est comprise entre 0,4 et 2% en poids pour respectivement 99,6 à 98% de VF2. De préférence elle est comprise entre 0,4 et 1,5% pour respectivement 99,6 à 98,5% de VF2. Le comonomère est avantageusement ajouté avant d'avoir polymérisé au moins 50% du VF2 nécessaire pour former tout le PVDF et de préférence au début de la polymérisation.

**S'agissant de l'additif dispersant** on désigne ainsi tout produit capable de disperser les monomères dans l'eau afin de faciliter leur polymérisation. Il peut s'agir d'un tensioactif, d'une composition émulsifiante ou d'un colloïde. Dans les procédés en émulsion on utilise avantageusement un tensioactif ionique dérivé d'un acide ou une d'une base organique.

**S'agissant du tensioactif** les brevets US 4025709, US 4569978, US 4360652, EP 626396 et EP 0655468 décrivent les procédés de synthèse du PVDF par mise en émulsion aqueuse du VF₂ et sa polymérisation, on y trouve de nombreuses formules de tensioactifs.

A titre d'exemple on peut citer ceux de formule générale : ZCₙF₂ₙCOOM dans laquelle Z est un atome de fluor ou de chlore, n est un nombre entier valant 6 à 13 et M est un atome d'hydrogène ou de métal alcalin ou un groupe ammonium ou un groupe ammonium comportant au moins un substituant alkyle inférieur.

On peut encore citer les perfluoroalkanoates de lithium de formule F₃C(CF₂)ₙ₋₂CO₂Li où n = 7, 8, 9 et 10.

La quantité de tensioactif introduite au départ ou en cours de polymérisation, peut être comprise entre 0.01 et 5 parties pour 100 parties d'eau présentes dans la charge initiale du réacteur.

Avantageusement on ajoute aussi, en plus du tensioactif, une paraffine. La paraffine mise en oeuvre a un point de fusion allant de 40 à 70°C et représente de 0,005 à 0,1 % en poids par rapport au poids total des monomères fluorés.

**S'agissant du colloide** il peut être choisis parmi les agents de mise en suspension usuels, tels que les alcools polyvinyliques et les dérivés cellulosiques hydrosolubles, tels que les alkylcelluloses ou les alkylhydroxyalkylcelluloses.

**S'agissant de l'amorceur organosoluble** on peut citer essentiellement les peroxydes hydrocarbonés, tel que le di-tertiobutylperoxyde, le dicumylperoxyde ou le peroxyde de benzoyle, les percarbonates de dialkyle, tel que le diethyl ou di-iso-propylpercarbonate ou di-n-propylpercarbonate, les peracides ou peresters, tel que le perpivalate de t-butyle ; le perpivalate de t-amyle ou le peroxybenzoate de t-butyle.

De préférence, l'amorceur organosoluble (ou initiateur radicalaire) mis en oeuvre représente de 0,05 à 1 % en poids par rapport au poids total du ou des monomères fluorés mis en oeuvre.

**S'agissant de l'agent de transfert**, on désigne ainsi tout produit qui permet de limiter la masse molaire du polymère tout en propageant la réaction de polymérisation. A titre d'exemple on peut citer l'acétone, l'isopropanol, l'acétate de méthyle, l'acétate d'éthyle, le diethylether, l'acétate de n-butyle, le malonate de diéthyle et le carbonate de diéthyle et différents composés chlorofluorocarbonés ou hydrocarbonés. La quantité d'agent de transfert dépend essentiellement de sa nature et de la masse molaire moyenne désirée pour la fraction de polymère obtenue en sa présence, laquelle conditionne la viscosité moyenne du produit final. De préférence, l'agent de transfert mis en oeuvre représente de 0,01 à 5 parties pour 100 parties de monomères consommés dans la réaction.

Après avoir polymérisé au moins 50 % du VF2 nécessaire pour former tout le PVDF on ajoute l'essentiel de l'agent de transfert de chaîne (CTA).

Le terme "l'essentiel de l'agent de transfert" veut dire au moins 55% en poids, avantageusement au moins 75% et de préférence au moins 85%. Avantageusement l'essentiel de l'agent de transfert est ajouté après avoir polymérisé au moins 52% et de préférence 55% du VF2 nécessaire pour former tout le PVDF. S'agissant de la durée pendant laquelle on injecte l'essentiel de l'agent de transfert elle peut correspondre à une variation de 2 à 20 points et de préférence 5 à 12 points de la proportion du VF2 polymérisé. C'est à dire que si on commence l'injection après avoir polymérisé 50 % du VF2 l'injection est terminée entre 52 et 70% et de préférence entre 55 et 62 %.

L'autre partie de l'agent de transfert peut être ajoutée tout au début de la polymérisation et/ou après avoir polymérisé la presque totalité du VF2. Par exemple l'autre partie peut être ajoutée avant d'avoir polymérisé 10% du VF2 et/ou après avoir polymérisé au moins 90% du VF2. Une autre possibilité pour incorporer la partie restante de l'agent de transfert est de procéder à un ajout en continu au cours de la polymérisation.

On décrit maintenant plus en détail le procédé de l'invention en opérant en émulsion. D'une manière générale le procédé suivant l'invention peut être conduit de la manière suivante.

Avantageusement on prépare une dispersion aqueuse de l'amorceur stabilisé par le tensioactif utilisé pour conduire la polymérisation. Pour réaliser cette dispersion, on mélange l'eau, l'amorceur et une faible fraction de la totalité du tensioactif dans un disperseur. C'est cette dispersion qui est ajoutée au début puis éventuellement au cours de la polymérisation.
a) *Polymérisation:* Après chargement du réacteur de polymérisation avec de l'eau, du tensioactif, éventuellement de la paraffine, on pressurise le réacteur, après avoir éliminé l'oxygène, en y ajoutant du fluorure de vinylidène seul ou en mélange avec le comonomère et on porte à la température choisie. Avantageusement, l'émulsion aqueuse est polymérisée à une température de 50 à 130°C. De préférence, la polymérisation est réalisée à une pression absolue de 40 à 120 bars. Le démarrage de la réaction est obtenu par addition de la dispersion d'amorceur .

Pendant la polymérisation on rajoute éventuellement le VDF seul ou en mélange avec un comonomère pour maintenir la pression ou pour obtenir une variation de pression contrôlée. On procède éventuellement à l'addition de l'amorceur par incréments ou en continu. Après avoir polymérisé au moins 50% du VF2 nécessaire pour former tout le PVDF on ajoute l'essentiel de l'agent de transfert de chaîne (CTA).
Après introduction de la quantité prévue de monomère(s) fluoré(s), le réacteur est dégazé et le latex vidangé.

### b) finition :

- Lavage : Le latex est dilué puis introduit dans un coagulateur ou il est soumis à un cisaillement en présence d'air. Sous l'effet cumulé de ces deux actions, le latex se transforme en crème aérée d'une densité inférieure à celle de l'eau.

Cette crème est éventuellement lavée à contre-courant avec de l'eau déionisée par exemple selon le procédé décrit dans les brevets US 4,128,517 et EP 0 460 284.

### - Séchage :

A la sortie de la colonne de lavage ou immédiatement après la coagulation la crème aérée est envoyée dans un récipient de stockage avant d'être dirigée par pompage dans un atomiseur qui la transforme en une poudre sèche.

Cette étape de séchage dans un atomiseur peut également être appliquée au latex initial, éventuellement dilué, au latex coagulé par exemple par cisaillement mécanique avec ou sans dilution préalable ou encore à la crème aérée.

Les températures de l'air à l'entrée et à la sortie de l'atomiseur sont déterminées de manière à obtenir un maximum d'efficacité en termes de productivité et d'amélioration de la coloration du PVDF. En général, la température de l'air à l'entrée sera comprise entre 130 et 200°C, et celle de l'air à la sortie entre 70 et 120°C. Avantageusement, ces deux températures seront comprises respectivement entre 150 et 180°C, et 80 et 100°C.

### [Exemples]

### Préparation de l'émulsion d'iso-propyl peroxydicarbonate (i-PP) :

A l'aide d'un disperseur de marque Ultra Turrax® réglé à 6000 tours/min, on agite un mélange de 1620 g d'eau déionisée, de 3.4 g de sel d'ammonium d'acide perfluorooctanoïque (C8F17COONH4) de 20g d'iso-propyl peroxydicarbonate et de 25 g d'acétate d'éthyle. L'émulsion obtenue reste stable plus de 8 heures si elle est conservée à 0°C avant son introduction dans le réacteur de polymérisation.

### Protocole de polymérisation

Dans un réacteur horizontal en acier inoxydable de 28 l on introduit successivement à 20°C :
16.2 l d'eau déionisée
14 g de sel d'ammonium d'acide carboxylique perfluoré (C8F17COONH4)
1,4 g de cire paraffinique de point de fusion d'environ 60°C.

Le réacteur est fermé, et l'air est chassé à l'aide d'une pompe à vide et le milieu est mis sous agitation à 100 tours/min et porté à 83°C. On introduit alors 1.6 Kg de VDF ainsi que la totalité du comonomère pour obtenir une pression absolue de 45 bars. Dans l'exemple 1 (comparatif) l'injection d'acétate d'éthyle se fait à ce stade. Ensuite, en moins de 10 min, on ajoute 250 g de l'émulsion d'iso-propyl peroxydicarbonate préparée comme décrit ci-dessus. La polymérisation démarre et on maintient le milieu à 83°C et la pression à 45 bars par un ajout continu de VDF. Pendant toute la polymérisation on ajoute à raison de 150 ml/h de l'émulsion d'i-PP au milieu réactionnel. Après avoir introduit un total de 6.1 kg de VDF, soit 4.5 kg de VDF ajouté à pression constante, ce qui correspond à 50% de VDF polymérisé, on injecte l'acétate d'éthyle (les quantités sont reportées dans le tableau suivant) avec un débit constant de manière à avoir terminé l'injection à un total de 6.55 kg de VDF, soit 4.95 kg de VDF ajoutée à pression constante, ce qui corrrespond à 55% de VDF polymérisé. Après avoir introduit un total de 10.6 kg de VDF, soit 9 kg de VDF ajouté à pression constante, on arrête l'ajout de VDF et la pression gazeuse dans le réacteur descend à 10 bars. On arrête aiors aussi l'addition d'émulsion d'i-PP. Le réacteur est dégazé. On obtient 28,0 kg de latex ayant une teneur en solide de 35,6 %.

### - Finition 1 : Lavage et atomisation :

Le lavage du latex est effectué selon l'enseignement des brevets US 4,128,517 et EP 0460 284. Le latex précédent est dilué à un taux de matière solide en poids de 12 % et introduit avec un débit de 18 kg/h dans un coagulateur constitué par un cylindre de 12 l en volume équipé d'une agitation mécanique. On introduit simultanément de l'air avec un débit de 15 l/h. Le latex est coagulé par le cisaillement produit par la turbine de coagulation (vitesse de bout de pâle de 12 m/s) et transformé en une crème aérée, de densité inférieure à celle de l'eau .

Cette crème est introduite dans le bas d'une colonne de lavage verticale, agitée, de 14 l de volume. Cette colonne est alimentée en tête par de l'eau déionisée à un débit de 180 I/h. L'eau de lavage est évacuée en pied de colonne.

La crème de latex coagulé lavé sortant en tête de colonne est introduite dans un récipient de stockage intermédiaire où elle épaissit selon une sédimentation inverse. La bouillie lavée, d'une teneur en matières solides de 20 %, est introduite dans un sécheur par atomisation de 1m³. La température de l'air introduit dans le sécheur est de 180°C et l'eau est éliminée à un débit de 7 kg/h. La température de l'air en sortie de l'atomiseur est de 100°C. La poudre de PVDF est produite avec un débit de 1,7 kg/h .

### Finition 2 : atomisation directe :

Le latex est dilué avec de l'eau à un taux de matière solide en poids de 20 % et introduit avec un débit de 8,7 kg /h dans le sécheur par atomisation. Les conditions de séchage utilisées sont alors similaires à celles décrites précédemment pour la crème après lavage.

Cette finition par atomisation directe est également applicable à la crème aérée avant son passage dans la colonne de lavage, ou encore, au latex coagulé sous agitation mécanique (sans apport d'air) après une dilution permettant d'obtenir une crème pouvant être transférée dans le sécheur par atomisation.

### Granulation

La poudre obtenue est granulée après malaxage à l'état fondu dans une extrudeuse bivis Clextral® BC 21. Le profil de chauffe utilisé est divisé en quatre zones de température croissante depuis l'alimentation jusqu'à la filière de l'extrudeuse : 150, 230, 230, 230°C. La découpe des granulés est effectuée après passage dans un bain d'eau à température ambiante au moyen d'une granulatrice à couteaux.

La méthode « Plaque test » correspond à une procédure de contrôle industrielle appliquée au produit en granulés.

Elle consiste a mouler sous pression des plaques de 65 mm de diamètre et de 4 mm d'épaisseur dans les conditions suivantes : préchauffe d'une minute sous 5 bars à 230°C puis montée en pression jusqu'à 20 bars. Ces plaques sont ensuite maintenues à 230°C pendant 9, 60 ou 120 minutes sous une pression de 20 bars. Pour le refroidissement, le moule est placé entre 2 plaques d'acier sous un poids de 21,6 kg pendant 30 minutes. Au terme de ce refroidissement, la plaque est démoulée et son indice de jaune est mesuré à l'aide d'un colorimètre ( Minolta® CR 300 ).

L'indice de fluidité à l'état fondu ou MFI (abréviation de Melt Flow Index) exprimé en g/10 min, est également reporté. La mesure est effectuée selon la norme ISO 1133 à une température de 230°C et sous une charge de 5 Kg.

Les variables principales des essais de synthèse et les résultats de coloration sont reportés dans le tableau suivant.

**Tableau 1**

| EXEMPLE | COMONOMERE Nature et taux dans le PVDF | INJECTION D'ACETATE D'ETHYLE PUR nombre et quantité | MFI ( g/10 min) | CONDITIONS DEFINlTON | Yl PLAQUE TEST | | |
|---|---|---|---|---|---|---|---|
| | | | | | 9 min | 60min | 120 min |
| 1 | Non | Une au départ 65g | 2 | lavage/atorrisation | 10 | | 20 |
| | | | | atomsation directe | 8 | | 18 |
| 2 | Non | Une entre 50 et 55% du VDF ajouté à P cte 180g | 2 | lavage/atomisation | 7,1 | 11,8 | 16,2 |
| | | | | atomisation directe | 5 | | 18,1 |
| 3 | HFP 1.3% en pds | Une entre 50 et 55% du VDF ajouté à P cte 225 g | 3,3 | lavage/atomisation | 5,4 | 12,8 | 16,1 |
| | | | | atomisation directe | 2,7 | | 10,3 |
| 4 | CTFE 0.5% en pds | Une entre 50 et 55% du VDF ajouté à P cte 225g | 2,8 | lavage/atomisation | 6,3 | | 20 |
| | | | | atomisation directe | 1,9 | | 11 |
| 5 | PVME 0.6% en pds | Une entre 50 et 55% du VDF ajouté à P cte 225 g | 2,8 | lavage/atomisation | 4,4 | | 16 |
| | | | | atomsation directe | 3,2 | | 9,9 |
| 6 | HFP 06% en poids | Une entre 50 et 55% du VDF ajouté à P cte 200g | 1,5 | lavage/atomisation | 5 | 8 | 10,1 |

## Revendications

1. Procédé discontinu ou semi-continu de fabrication de copolymère de VDF comprenant en poids 95 à 99,9% de VF2 pour respectivement 5 à 0,1 % d'au moins un comonomère fluoré dans lequel :
■ on réalise une dispersion de VDF (fluorure de vinylidène) dans l'eau, éventuellement à l'aide d'un additif dispersant, la dite dispersion étant initialement mise en contact avec un amorceur organosoluble capable de provoquer la polymérisation des monomères,
■ on continue éventuellement d'ajouter du VDF,
■ on introduit le comonomère soit dans la dispersion initiale de VDF soit au cours de la polymérisation soit en partie dans la dispersion initiale et en partie au cours de la polymérisation,
■ puis après avoir polymérisé au moins 50% du VDF nécessaire pour former tout le PVDF on ajoute l'essentiel de l'agent de transfert de chaîne (CTA),
■ on polymérisé le reste du VDF,
■ on sépare par tout moyen le PVDF de l'eau et des restes éventuels des réactifs engagés.

2. Procédé selon la revendication 1 dans lequel la proportion de comonomère est comprise entre 0,4 et 2% en poids pour respectivement 99,6 à 98 % de VDF.

3. Procédé selon la revendication 2 dans lequel la proportion de comonomère est comprise entre 0,4 et 1,5% pour respectivement 99,6 à 98.5 de VDF.

4. Procédé selon l'une quelconque des revendications précédentes dans lequel le comonomère est avantageusement ajouté avant d'avoir polymérisé au moins 50% du VDF nécessaire pour former tout le PVDF.

5. Procédé selon l'une quelconque des revendications précédentes dans lequel le comonomère est ajouté au début de la polymérisation.

6. Procédé selon l'une quelconque des revendications précédentes dans lequel le terme "l'essentiel de l'agent de transfert" veut dire au moins 55% en poids.

7. Procédé selon la revendication 6 dans lequel le terme "l'essentiel de l'agent de transfert" veut dire au moins 75% en poids.

8. Procédé selon la revendication 7 dans lequel le terme "l'essentiel de l'agent de transfert" veut dire au moins 85% en poids.

9. Procédé selon l'une quelconque des revendications précédentes dans lequel l'essentiel de l'agent de transfert est ajouté après avoir polymérisé au moins 52% du VDF nécessaire pour former tout le PVDF.

10. Procédé selon la revendication 9 dans lequel l'essentiel de l'agent de transfert est ajouté après avoir polymérisé au moins 55% du VDF nécessaire pour former tout le PVDF.

11. Procédé selon l'une quelconque des revendications précédentes dans lequel la durée pendant laquelle on injecte l'essentiel de l'agent de transfert correspond à une variation de 2 à 20 points de la proportion du VDF polymérisé.

12. Procédé selon la revendication 11 dans lequel la durée pendant laquelle on injecte l'essentiel de l'agent de transfert correspond à une variation de 5 à 12 points de la proportion du VDF polymérisé.

13. Procédé selon l'une quelconque des revendications précédentes dans lequel l'autre partie de l'agent de transfert peut être ajoutée tout au début de la polymérisation et/ou après avoir polymérisé la presque totalité du VDF.

14. Procédé selon la revendication 13 dans lequel l'autre partie peut être ajoutée avant d'avoir polymérisé 10% du VF2 et/ou après avoir polymérisé au moins 90% du VDF.

15. Procédé selon l'une quelconque des revendications 1 à 12 dans lequel l'autre partie de l'agent de transfert peut être ajoutée en continu pendant la polymérisation.

16. Procédé selon l'une quelconque des revendications précédentes dans lequel on effectue la polymérisation en émulsion puis à l'issue de la polymérisation le PVDF est recueilli sous forme d'un latex qu'on coagule pour obtenir une crème moins dense que l'eau puis on la sèche sans l'avoir lavée à l'eau deïonisée en la mettant au contact d'un gaz chaud dans un atomiseur et on recueille le PVDF en poudre.

17. Procédé selon l'une quelconque des revendications 1 à 15 dans lequel on effectue la polymérisation en émulsion puis à l'issue de la polymérisation le PVDF est recueilli soit sous forme d'un latex qu'on dilue éventuellement , soit sous forme d'un latex coagulé, soit sous forme d'un latex qu'on coagule pour obtenir une crème moins dense que l'eau puis on le sèche sans l'avoir lavé à l'eau deïonisée en le mettant au contact d'un gaz chaud dans un atomiseur et on recueille le PVDF en poudre.
